# EUROPEAN PATENT APPLICATION

(11) **EP 4 439 039 A1**
(43) Date of publication of application: **02.10.2024**
(21) Application number: 23165163.9
(22) Date of filing: 29.03.2023
(51) Int. Cl.: G01N 1/10, G01N 1/22

(54) **SAMPLING PROBE, CONTAINMENT, AND CORRESPONDING USE**

(71) Applicant: SKAN AG, 4123 Allschwil (CH)
(72) Inventor: Kramer, Maxime, 2300 La Chaux-de-Fonds (CH); Richardson, Andrew, 68220 Michaelbach-le-Haut (DE); Hommes, Gregor, 47669 Wachtendonk (DE)
(74) Representative: Mertzlufft-Paufler, Cornelius

(57) **Abstract**

In a sampling probe (1) having a nozzle (6) at its intake (34), it is proposed to use a heating element (9) for heating up the nozzle (6)

## Description

The invention concerns a sampling probe, comprising a sampling portion and a connecting portion, whereby the sampling portion accommodates a nozzle that is in fluid connection with the connecting portion.

Sampling probes are known for use in containments, where they extract a portion of the interior gas for monitoring of levels of certain components like decontamination agents. To this end, a nozzle may be used to create a defined fluid stream.

The invention is based on the problem of how to achieve a responsive measurement system.

According to the invention, the features of claim 1 are proposed. In particular, to solve the problem, the invention proposes, for a sampling probe as described in the beginning, that the sampling portion accommodates at least one heating element that is in thermally conducting contact with the nozzle. It has been observed that heating up the nozzle avoids a cooling due to the fluid, preferably a gas, passing the nozzle. This reduces condensation in the surrounding of the nozzle, thereby increasing an overall response time of the measurement system.

The invention uses the observation that condensate reservoirs on walls of fluid conduits will slow down a response to changing portions of an agent as they can act as a buffer. This may be particularly useful for monitoring a level hydrogen peroxide (H₂O₂) in a containment.

In one embodiment of the invention, the at least one heating element is arranged in a blind hole. Thus, the heating element can be easily separated from an interior of a containment into which the sampling probe protrudes.

In one embodiment of the invention, the at least one heating element is accessible from the connecting portion. This allows easy access to the heating element for electrical connection.

It is particularly advantageous if the heating element is arranged in a blind hole from the connection portion. Thus, easy replacement of the heating element and/or electrical connection can be achieved without disturbing an interior of a containment in which the sampling probe protrudes. Also, proliferation of contaminations from the heating element into an interior of a containment can be avoided.

On one embodiment of the invention, the heating element is part of an insertion cartridge. This may help to simplify the construction. Also, ready-to-use cartridges may be used.

In one embodiment of the invention, the sampling portion comprises at least one temperature sensing element. Thus, a temperature regulation at the nozzle may be performed, preferably automatically. This allows the prevention of condensation at minimal energy consumption. Also, overheating of the sample probe may be avoided.

Preferably, the sampling portion comprises at least two temperature sensing elements. This allows to use a redundancy to establish a safe temperature monitor and/or to monitor separate regions for overheating, e.g. at an outer surface, and undercooling, e.g. at the nozzle.

In one embodiment of the invention, the at least one temperature sensing element is arranged in a blind hole. This may allow to achieve a good thermal coupling to the nozzle and/or easy manufacturing by drilling and/or a tight closure against an interior of a containment in which the sampling probe protrudes.

On one embodiment of the invention, the at least one temperature sensing element is accessible from the connecting portion. Thus, the at least one temperature sensing element may be easily connected electronically from the connecting portion, e.g. from an outside of a containment in which the sampling probe protrudes.

It is particularly advantageous if the at least one temperature sensing element is arranged in a blind hole that is accessible from the connecting portion. Thus, proliferation of contaminations from the temperature sensing element into an interior of a containment can be avoided.

On one embodiment of the invention, the sampling portion comprises a preferably rigid shaft. It has been found that a shaft, in particular a rigid shaft, allows for easy sealing of a hole through which the sampling probe is inserted into the containment.

The rigid shaft may have a cylindrical portion in order to improve the sealing.

On one embodiment of the invention, the fluid connection comprises at least two blind holes from opposing ends of the sampling probe. Thus, the fluid connection can be easily manufactured.

For example, the at least two blind holes penetrate each other at their respective blind ends. Thus, a simple way of connecting through a bulk material is described.

On one embodiment of the invention, the nozzle is arranged in a tip portion of the sampling portion. Thus, condensation upstream of the nozzle can be avoided. For example, the nozzle may be detachable, preferably screwable, to allow easy replacement.

On one embodiment of the invention, the tip portion is screwed against an insertion stop of the shaft. Thus, good thermal connection can be established. This will help to transfer heat into the tip, thereby avoiding or mitigating condensation at the nozzle.

On one embodiment of the invention, the blind hole accommodating the heating element ends at a distance from the detachable tip portion. Thus, the accommodating space for the heating element may be closed against the fluid connection and/or the interior of the containment.

Alternatively or additionally, the blind hole accommodating the at least one temperature sensing element ends at a distance from the detachable tip portion. Thus, the accommodating space for the temperature sensing element may be closed against the fluid connection and/or the interior of the containment.

On one embodiment of the invention, the nozzle is created on a preferably pot-shaped sleeve. It has turned out that a pot-shaped sleeve is a good form for easy replacement.

Preferably the nozzle has a hole with a nozzle hole diameter of less than 0.5 mm. Thus, good measuring properties can be achieved.

On one embodiment of the invention, the sleeve is press-fit into a hole of the tip portion. Thus, easy manufacturing can be achieved.

On one embodiment of the invention, the shaft and the tip portion each have wrench flats. Thus, a tight mechanical and thermal contact can be achieved.

On one embodiment of the invention, the shaft and/or the tip portion are made of solid metal. Solid metal is easy the clean. Also, solid metal can be used for establishing a good thermal contact.

A preferred application of the invention is with a containment, in particular isolator, with a sampling probe according to the invention, in particular as claimed and/or described herein.

In particular, the connection portion may be arranged outside the containment, and the sampling portion may penetrate an enclosure surface, in particular a wall or a floor, of the containment, in particular of the isolator.

A preferred use of a sampling probe according to the invention, in particular as described above and/or claimed below, is in a containment, in particular in an isolator. Such a containment may be formed as described above.

The invention is now described in more detail by means of an embodiment example,but is not limited to the embodiment example. Further embodiments result from combining the features of individual or several claims with each other and/or with individual or several features of the embodiment example.

It is shown in
- Fig. 1: a three-dimensional perspective view of a sampling probe,
- Fig. 2: a longitudinal section of Fig. 1 along a plane B-B,
- Fig. 3: the location of the sectional plane B-B of Fig. 2,
- Fig. 4: a second longitudinal section of Fig. 1 along a plane D-D,
- Fig. 5: the location of the sectional plane D-D of Fig. 4,
- Fig. 6: a three-dimensional perspective view of the sampling probe of Fig. 1 without the probe shaft, and
- Fig. 7: a schematic view of a preferred use of the sampling probe of Fig. 1 in a containment.

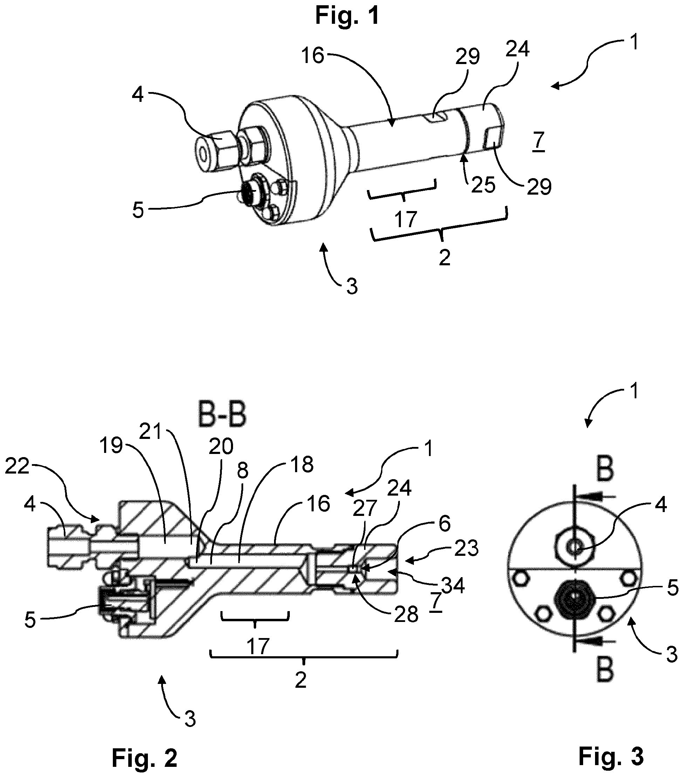

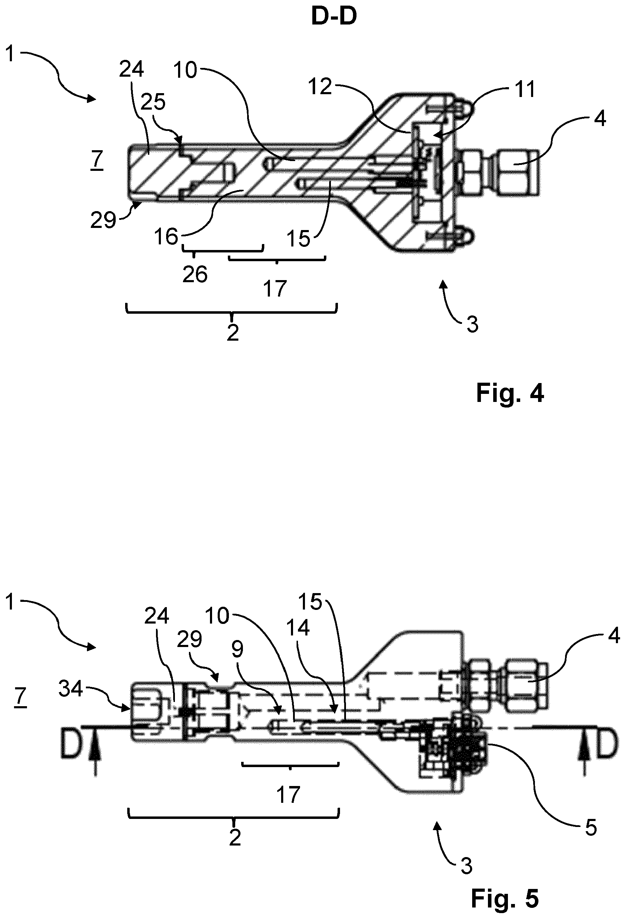

The sampling probe 1 as shown in Figs. 1 to 7 generally has a sampling portion 2 and a connecting portion 3.

The connecting portion 3 has a fluid connection port 4 and electrical connection means 5 to be described later in more detail.

Inside the sampling portion 2 there is a nozzle 6 (cf. Fig. 2) that is in fluid connection to the outside 7 of the sampling portion 2.

Inside the sampling portion 2, there is a fluid connection 8 between the nozzle 6 and the fluid connection port 4.

The sampling portion 2 accommodates a heating element 9 in such a way that there is a good thermal connection and a low thermal resistance between the heating element 9 and the nozzle 6.

In other words, the nozzle 6 is thermally coupled to the heating element 9.

The heating element 9 is of the electric type and is electrically connected to the electrical connection means 5.

The heating element 9 is arranged in a blind hole 10. The blind hole 10 opens towards the connecting portion 3 and is closed towards the nozzle 6, thereby forming a dead end. Thus, the heating element 9 is accessible from the connecting portion 3. Circuitry 11, being a part of the electrical connection means 5, on a printed circuit board 12 allows for controlling the heating element 9.

The heating element 9 is integrated in an insertion cartridge 13.

In addition to the heating element 9, the sampling portion 2 accommodates at least one temperature sensing element 14. The temperature sensing element 14 may be of the electrical type and is electrically connected to the electrical connecting means 5 for read out.

The temperature sensing element 14 is arranged in a second blind hole 15. The blind hole 15 is separated from the blind hole 10. It opens towards the connecting portion 3 and is closed in the opposite direction. Thus, similarly to the heating element 9, the temperature sensing element 13 is accessible from the outside through the connecting portion 2.

The temperature sensing element 14 may be arranged so that it follows closely the temperature of the nozzle 6 and/or so that it monitors the temperature on an outer surface of the sampling probe 1.

The blind holes 10, 15 and the fluid connection 8 are formed in a solid shaft 16. The shaft 16 is a part of the sampling portion 2 and has a cylindrical portion 17 that may carry a sealing when mounted on a wall.

From Fig. 2, it can be seen that the fluid connection 8 is formed by two blind holes 18, 19 that meet and penetrate each other at their respective blind ends 20, 21. The blind holes 18, 19 are machined from opposing ends 22, 23 of the sampling probe 1. The blind holes 18, 19 are offset against each other in a transversal direction.

The nozzle 6 is arranged at the free end 23 of the sampling probe 1 in a tip portion 24. The tip portion 24 can be screwed onto the shaft 16. The tip portion 24 is made of a solid piece of metal.

In order to establish a good thermal conduction, the shaft 16 forms an insertion stop 25 so that a contact surface is formed.

The blind holes 10, 15 end at a distance 26 from the tip portion 24.

The nozzle 6 is a hole of less than 0.5 mm in a pot-shaped sleeve 27. The sleeve 27 is press-fit into a hole 28 of the tip portion 24.

The tip portion 24 and the shaft 16 each have, on their respective outside, wrench flats 29 to establish a tight two-dimensional contact between the tip portion 24 and the shaft 16.

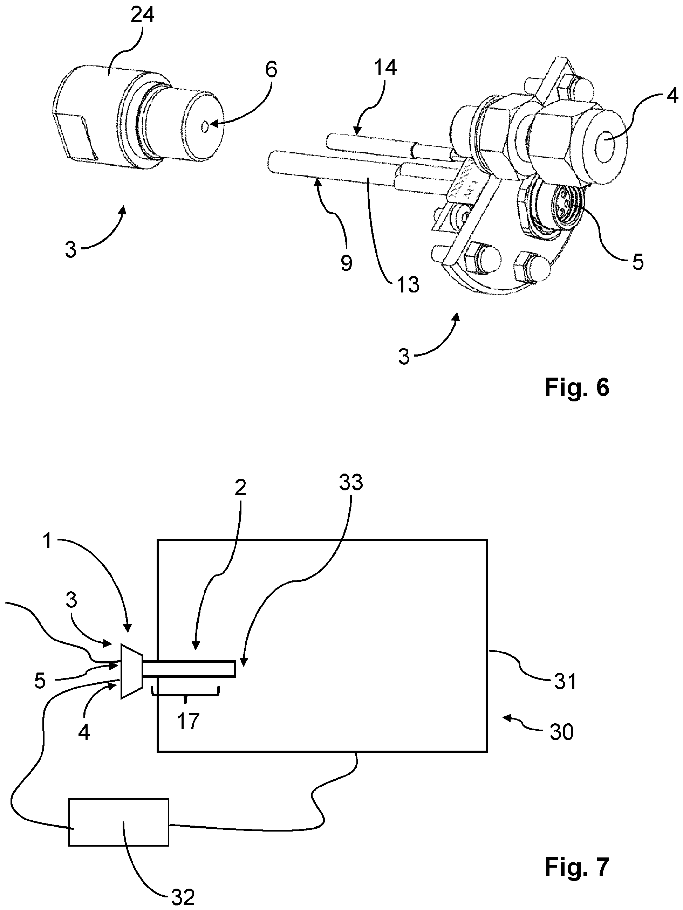

Fig. 7 shows a schematic view of a typical application of the invention.

A containment 30 has am enclosure surface 31 that comprises walls, a bottom and a top in a usual way.

The sampling portion 2 penetrates the enclosure surface 31 in order to access a region of interest 33 inside the containment 30 from the outside.

The sampling probe 1 is, at its fluid connection port 4, in fluid connection to a measurement device 32.

The fluid, in most embodiments a gas or an aerosol, may be inserted back into the containment, as shown, or may be collected elsewhere.

To summarize, in a sampling probe 1 having a nozzle 6 at its intake 34, it is proposed to use a heating element 9 for heating up the nozzle 6.

### List of reference numerals

- 1: sampling probe
- 2: sampling portion
- 3: connecting portion
- 4: fluid connection port
- 5: electrical connection means
- 6: nozzle
- 7: outside
- 8: fluid connection
- 9: heating element
- 10: blind hole
- 11: circuitry
- 12: printed circuit board
- 13: insertion cartridge
- 14: temperature sensing element
- 15: blind hole
- 16: shaft
- 17: cylindrical portion
- 18: blind hole
- 19: blind hole
- 20: blind end
- 21: blind end
- 22: end of the sampling probe
- 23: end of the sampling probe
- 24: tip portion
- 25: insertion stop
- 26: distance
- 27: sleeve
- 28: hole of the tip portion
- 29: wrench flats
- 30: containment
- 31: enclosure surface
- 32: measurement device
- 33: region of interest
- 34: intake

## Claims

1. Sampling probe (1), comprising a sampling portion (2) and a connecting portion (3), whereby the sampling portion (2) accommodates a nozzle (6) that is in fluid connection (8) with the connecting portion (3), **characterised in that** the sampling portion (2) accommodates at least one heating element (9) that is in thermally conducting contact with the nozzle (6).

2. Sampling probe (1) according to the preceding claim,
wherein the at least one heating element (9) is arranged in a blind hole and/or is accessible from the connecting portion (3).

3. Sampling probe (1) according to any of the preceding claims, wherein the heating element (9) is part of an insertion cartridge (13).

4. Sampling probe (1) according to any of the preceding claims, wherein the sampling portion (2) comprises at least one temperature sensing element (14), preferably at least two temperature sensing elements (14).

5. Sampling probe (1) according to any of the preceding claims, wherein the at least one temperature sensing element (14) is arranged in a blind hole (15) and/or is accessible from the connecting portion (3).

6. Sampling probe (1) according to any of the preceding claims, wherein the sampling portion (2) comprises a preferably rigid shaft (16), preferably with a cylindrical portion (17).

7. Sampling probe (1) according to any of the preceding claims, wherein the fluid connection (8) comprises at least two blind holes (18, 19) from opposing ends (22, 23) of the sampling probe (1), preferably whereby the at least two blind holes (18, 19) penetrate each other at their respective blind ends (20, 21).

8. Sampling probe (1) according to any of the preceding claims, wherein the nozzle (6) is arranged in a preferably detachable, preferably screwable, tip portion (24) of the sampling portion (2).

9. Sampling probe (1) according to any of the preceding claims, wherein the tip portion (24) is screwed against an insertion stop (25) of the shaft (16).

10. Sampling probe (1) according to any of the preceding claims, wherein the blind hole (10) accommodating the heating element (9) and/or the blind hole (15) accommodating the at least one temperature sensing element (14) end at a distance (26) from the preferably detachable tip portion (24).

11. Sampling probe (1) according to any of the preceding claims, wherein the nozzle (6) is created on a preferably pot-shaped sleeve (27), preferably with a nozzle hole diameter of less than 0.5 mm.

12. Sampling probe (1) according to any of the preceding claims, wherein the sleeve (27) is press-fit into a hole (28) of the tip portion (24).

13. Sampling probe (1) according to any of the preceding claims, wherein the shaft (16) and the tip portion (24) each have wrench flats (29).

14. Sampling probe (1) according to any of the preceding claims, wherein the shaft (16) and/or the tip portion (24) are made of solid metal.

15. Containment (30), in particular isolator, with a sampling probe (1) according to any of the preceding claims, in particular whereby the connection portion (3) is arranged outside the containment and the sampling portion (2) penetrates an enclosure surface (31), in particular a wall or a floor, of the containment (30), in particular of the isolator.

16. Use of a sampling probe (1) according to any of the preceding claims 1-13 in a containment (30), in particular in an isolator and/or in a containment (30) according to the preceding claim.
